(19) Europäisches Patentamt
European Patent Office
Office européen des brevets

(11) EP 2 536 778 B1

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **11704222.6**

(22) Anmeldetag: **17.02.2011**

(51) Int Cl.:
***C08G 65/00*** *(2006.01)*

(86) Internationale Anmeldenummer:
**PCT/EP2011/052337**

(87) Internationale Veröffentlichungsnummer:
**WO 2011/101403 (25.08.2011 Gazette 2011/34)**

(54) **VERFAHREN ZUR HERSTELLUNG VON POLYETHERCARBONATPOLYOLEN MIT DOPPELMETALLCYANIDKATALYSATOREN UND IN GEGENWART VON METALLSALZEN**

PROCESS FOR PREPARING POLYETHER CARBONATE POLYOLS WITH DOUBLE METAL CYANIDE CATALYSTS AND IN THE PRESENCE OF METAL SALTS

PROCÉDÉ DE PRODUCTION DE POLYÉTHERCARBONATE POLYOLS AVEC DES CATALYSEURS À BASE DE CYANURE MÉTALLIQUE DOUBLE ET EN PRÉSENCE DE SELS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2010 DE 102010008410**

(43) Veröffentlichungstag der Anmeldung:
**26.12.2012 Patentblatt 2012/52**

(73) Patentinhaber: **Bayer Intellectual Property GmbH**
**40789 Monheim (DE)**

(72) Erfinder:
- **WOLF, Aurel**
  **42489 Wülfrath (DE)**
- **GRASSER, Stefan**
  **51377 Leverkusen (DE)**
- **GÜRTLER, Christoph**
  **50676 Köln (DE)**
- **HOFMANN, Jörg**
  **47800 Krefeld (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A2- 0 090 445**
**EP-A2- 0 222 453**
**WO-A1-99/48607**
**WO-A1-03/029240**
**WO-A1-2006/103212**
**WO-A2-2008/024363**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktionellen Startersubstanzen mit Hilfe von Doppelmetallcyanid (DMC)-Katalysatoren und in Gegenwart von Metallsalzen.

Die Herstellung von Polyethercarbonatpolyolen durch katalytische Anlagerung von Alkylenoxiden (Epoxiden) und Kohlendioxid an H-funktionelle Startersubstanzen (Starter) wurde seit mehr als 40 Jahren intensiv untersucht (Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, die jeweils auch Heteroatome wie beispielsweise O, S, Si usw. enthalten können, und wobei e und für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt entsteht das in Formel (I) gezeigte cyclische Carbonat (beispielsweise für R = $CH_3$ Propylencarbonat).

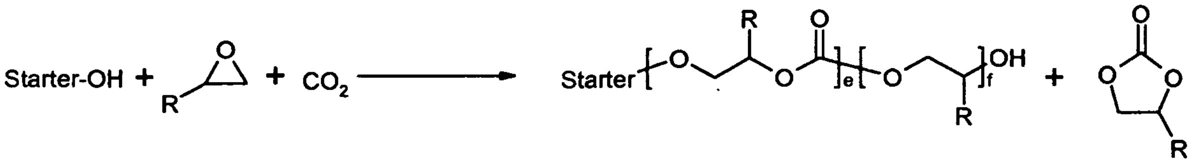
(I)

Als Aktivierung im Sinne der Erfindung wird ein Schritt bezeichnet, bei dem eine Teilmenge Alkylenoxidverbindung, gegebenenfalls in Gegenwart von $CO_2$, zum DMC-Katalysator und gegebenenfalls zum Metallsalz gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten des Hotspot. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

EP-A 0 222 453 beschreibt die Herstellung von Polyethercarbonatpolyolen durch Einsatz eines DMC-Katalysators in Verbindung mit einem Co-Katalysator bei Temperaturen von 40 - 200 °C und in einem Druckbereich von 2 bis 40 bar absolut, wobei als Co-Katalysator zwei Gruppen angeführt werden: (a) ein oder mehrere Salze bestehend aus wenigstens zweiwertigen Metallionen und metallfreien Anionen, die eine Löslichkeit in Wasser von mindestens 1g/100 mL bei 25 °C haben und (b) eine oder mehrere nicht-metallhaltige Säuren, deren 0,1 normale wässrige Lösung in Wasser bei 25 °C einen pH-Wert von 3 oder kleiner hat. Bevorzugter Co-Katalysator ist Zinksulfat und Zinksulfat-Hydrat. Der Co-Katalysator wird entweder separat in den Reaktor gegeben oder bevorzugt bereits während der Herstellung des Katalysators zur Suspension zugegeben. Die Co-Katalysatoren liegen relativ zum DMC-Katalysator in einem molaren Verhältnis von 10 bis 0,1 und bevorzugt im Bereich 4 bis 0,2 vor. Bei dem Verfahren gemäß EP-A 0 222 453 werden bis zu 60 Gew.-% Epoxid (relativ zum Starter) zur Katalysatoraktivierung vorgelegt. Das Verfahren lieferte signifikant hohe Mengen an dem Nebenprodukt Propylencarbonat (zwischen 22,5 und 31 Gew.-%). Somit weist dieses Verfahren eine aus Sicherheitsaspekten zu hohe Menge an Epoxid im Aktivierungsschritt und eine ungünstige Selektivität auf.

In dem Artikel von J. Kuyper et al. im Journal of Catalysis 1987, Vol. 105, Seite 163-174 sind Hexacyanocobaltat-basierte Systeme $Zn_2[Co(CN)_6](OH)$, gebildet aus $Zn_3[Co(CN)_6]_2$ und $Zn(OH)_2$, sowie anorganische Co-Katalysatoren für diese Systeme offenbart. Hierbei ist $Zn_2[Co(CN)_6](OH)$ eine Vorstufe, die mit Co-Katalysatoren wie Säuren oder Sulfaten umgesetzt wird, bevor der neu entstehende Katalysator zur Homo-Polymerisation von Epoxiden (unter Ausschluss von Kohlendioxid) eingesetzt wird. Diese Co-Katalysatoren erhöhen die Stabilität der in der Homo-Polymerisation von Epoxiden eingesetzten Katalysatoren. Die Verwendung zur Copolymerisation von Epoxiden mit $CO_2$ ist nicht erwähnt.

WO-A 99/48607 offenbart DMC-Katalysatoren, die mit Cyanid-freien Verbindungen der Elemente der Gruppe IIA des Periodensystems modifiziert sind sowie deren Einsatz in der Homo-Polymerisation von Epoxiden, wobei Polyetherpolyole mit niedrigen Gehalten an ungesättigten Bindungen und/oder hohen Molekulargewichten erhalten werden. Das Gegenion zum Kation aus der Gruppe IIa hat gemäß der Offenbarung von WO-A 99/48607 keinen technischen Effekt. Bei allen beschriebenen Katalysatoren wird die Verbindung mit einem Element der Gruppe IIA bei der Herstellung des DMC-Katalysators zugegeben. Dagegen wird von WO-A 99/48607 eine getrennte Zugabe von DMC-Katalysator

und der Verbindung eines Elements der Gruppe IIA nicht beschrieben.

Es war daher Aufgabe der vorliegenden Erfindung, ein Verfahren zur Herstellung von Polyethercarbonatpolyolen bereitzustellen, welches sowohl zu einem hohen Gehalt an eingebautem $CO_2$ führt und gleichzeitig eine günstige Selektivität (d.h. niedriges Verhältnis von cyclischem Carbonat zu linearem Polyethercarbonat) aufweist.

Überraschend wurde gefunden, dass ein hoher Gehalt an eingebautem $CO_2$ und gleichzeitig eine günstige Selektivität (d.h. niedriges Verhältnis von cyclischem Carbonat zu linearem Polyethercarbonat) erreicht wird durch ein Verfahren zur Herstellung von Polyethercarbonatpolyolen aus einer oder mehrerer H-funktionellen Startsubstanzen, eines oder mehrerer Alkylenoxiden und Kohlendioxid in Gegenwart eines DMC-Katalysators und in Gegenwart von wenigstens einem Metallsalz, dadurch gekennzeichnet, dass

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator und/oder das Metallsalz der H-funktionellen Startersubstanz oder dem Gemisch von mindestens zwei H-funktionellen Startersubstanzen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere Alkylenoxide und Kohlendioxid zu der aus Schritt ($\beta$) resultierenden Mischung zugesetzt werden ("Copolymerisation"), wobei die für die Copolymerisation eingesetzten Alkylenoxide gleich oder verschieden sein können von den bei der Aktivierung eingesetzten Alkylenoxiden,

wobei als Metallsalz mindestens eine Verbindung ausgewählt aus der Gruppe bestehend aus Erdalkalihalogeniden, Erdalkalicarboxylaten oder Aluminiumcarboxylaten eingesetzt wird.

In einer bevorzugten Ausführungsform wird im erfindungsgemäßen Verfahren als Metallsalz Magnesiumhalogenid in einer Menge von 0,8 bis 4,0 [mmol Metallsalz] / [mmol Co] (wie beispielsweise Magnesiumchlorid), Erdalkalicarboxylat und/oder Aluminiumcarboxylat, insbesondere Magnesiumcarboxylat (wie beispielsweise Magnesiumacetat, Magnesiumstearat), Calciumcarboxylat (wie beispielsweise Calciumstearat) und/oder Aluminiumcarboxylat (wie beispielsweise Aluminiumstearat) eingesetzt. Dies hat den technischen Effekt, dass das erfindungsgemäße Verfahren zusätzlich zu einem hohen Gehalt an eingebautem $CO_2$ im resultierenden Polyethercarbonatpolyol und einer günstigen Selektivität auch eine kurze Aktivierungszeit aufweist.

In einer besonders bevorzugten Ausführungsform wird im erfindungsgemäßen Verfahren als Metallsalz Calciumcarboxylat (wie beispielsweise Calciumstearat) eingesetzt. Dies hat den technischen Effekt, dass das erfindungsgemäße Verfahren zusätzlich zu einem hohen Gehalt an eingebautem $CO_2$ im resultierenden Polyethercarbonatpolyol, einer günstigen Selektivität und einer kurzen Aktivierungszeit auch eine auf niedrigem Niveau befmdliche Polydispersität des resultierenden Polyethercarbonatpolyols aufweist.

Für die Angabe der Menge an eingesetztem Metallsalz wird das Verhältnis der eingesetzten Stoffmenge des Metallsalzes bzw. der Summe der Stoffmengen der eingesetzten Metallsalze bezogen auf die eingesetzte Stoffmenge an Cobalt stammend aus dem DMC-Katalysator (angegeben als [mmol Metallsalz] / [mmol Co]) zugrunde gelegt.

Erdalkalimetalle im Sinne der Erfindung sind die Elemente der Gruppe 2 des Periodensystems der Elemente und umfassen die Elemente Beryllium (Be), Magnesium (Mg), Calcium (Ca), Strontium (Sr), Barium (Ba) und Radium (Ra).

Halogenide sind die Anionen der Elemente der Gruppe 17 des Periodensystems der Elemente und umfassen die Anionen Fluorid, Chlorid, Bromid, Iodid und Astatid.

Carboxylate im Sinne dieser Erfindung sind Anionen von Carbonsäuren, die wenigstens eine Carboxylatgruppe enthalten.

Die Carboxylate weisen beispielsweise nur eine Carboxylatgruppe gemäß Formel (II) auf,

$$R^1\text{-COO}^- \qquad \text{(II)}$$

wobei $R^1$ für H, $C_1$ bis $C_{30}$-Alkyl (wie beispielsweise $CH_3$, $CH_3$-$CH_2$, $CH_3$-$CH_2$-$CH_2$, $CH_3$-$(CH_2)_3$, $CH_3$-$(CH_2)_4$, $CH_3$-$(CH_2)_5$, $CH_3$-$(CH_2)_6$, $CH_3$-$(CH_2)_7$, $CH_3$-$(CH_2)_8$, $CH_3$-$(CH_2)_{14}$, $CH_3$-$(CH_2)_{16}$ bzw. deren verzweigte Isomere), $C_7$ bis $C_{30}$-Alkaryl (wie beispielsweise Benzyl) oder $C_6$ bis $C_{30}$-Aryl (wie beispielsweise Phenyl oder Naphthyl) steht. Ebenso kann es sich bei den Carboxylaten um ungesättigte Carboxylate handeln wie beispielsweise Acrylat, Methacrylat und

ungesättigte Fettsäure-Salze wie Oleat (Salz der Ölsäure) mit $R^1 = CH_3\text{-}(CH_2)_7\text{-}CH{=}CH\text{-}(CH_2)_7$, Linolat (Salz der Linolsäure) mit $R^1 = CH_3\text{-}(CH_2)_4\text{-}CH{=}CH\text{-}CH_2\text{-}CH{=}CH\text{-}(CH_2)_7$ sowie Linolenat (Salz der Linolensäure) mit $R^1 = CH_3\text{-}CH_2\text{-}CH{=}CH\text{-}CH_2\text{-}CH{=}CH\text{-}CH_2\text{-}CH{=}CH\text{-}(CH_2)_7$.

$R^1$ in Formel (II) kann auch heteroaromatisch sein wie beispielsweise im Falle von Nicotinoat.

Die Carboxylate können auch beispielsweise zwei Carboxylatgruppen gemäß Formel (III) aufweisen,

$$^{-}OOC\text{-}R^2\text{-}COO^{-} \qquad \text{(III)}$$

wobei $R^2$ für eine Einfachbindung (im Falle von Oxalat), $C_1$ bis $C_{30}$-Alkylen (wie beispielsweise $CH_2$, $CH_2\text{-}CH_2$, $(CH_2)_3$, $(CH_2)_4$, $(CH_2)_5$, $(CH_2)_6$, $(CH_2)_7$, -CH=CH- (im Falle von Maleat oder Fumarat)), $C_7$ bis $C_{30}$-Alkaryl (wie beispielsweise Benzyl) oder $C_6$ bis $C_{30}$-Aryl (wie beispielsweise Phenyl oder Naphthyl) steht.

Die Carboxylate können darüber hinaus noch mit Heteroatomen (wie beispielsweise Halogenen wie Fluor, Chlor, Brom, Iod) und/oder mit einer oder mehreren funktionellen Gruppen wie Hydroxyl (-OH), Amin (primäre Aminogruppe $-NH_2$, sekundäre Aminogruppe -NH oder tertiäre Aminogruppe - N) oder Thiol (-SH) substituiert sein. Beispiele von solchen Carboxylaten sind die Salze der Hydroxycarbonsäuren wie Glykolat (Salz der Glykolsäure), Lactat (Salz der Milchsäure), Tartrat (Salz der Weinsäure), Salicylat (Salz der Salicylsäure). Weitere Beispiele sind die Salze der Aminosäuren wie die Salze von Alanin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin und Valin. Weitere Beispiele sind die Salze der Carbonsäuren mit Thiolgruppe wie beispielsweise die Salze der 2-Mercaptopropionsäure. Beispiel für Carboxylate mit zwei funktionellen Gruppen sind die Salze des Cysteins (enthaltend eine Aminogruppe und eine Thiolgruppe).

Im Allgemeinen können die Metallsalze in einer Gesamtmenge von 0,2 bis 10,0 [mmol Metallsalz] / [mmol Co] eingesetzt werden. Vorzugsweise werden die Metallsalze in einer Gesamtmenge von 0,8 bis 4,0 [mmol Metallsalz] / [mmol Co], besonders bevorzugt in einer Gesamtmenge von 1,2 bis 3,0 [mmol Metallsalz] / [mmol Co] eingesetzt.

Zu Schritt (α):

Zur Herstellung von Polyethercarbonatpolyolen durch katalytische Anlagerung von Alkylenoxiden (Epoxiden) und Kohlendioxid an H-funktionelle Startersubstanzen (Starter) in Gegenwart der erfindungsgemäßen DMC-Katalysatoren und eine oder mehrere Metallsalze wird die H-funktionelle Startersubstanz oder ein Gemisch aus mindestens zwei H-funktionellen Startersubstanzen vorgelegt. Gegebenenfalls wird in Schritt (α)

(α1) die H-funktionelle Startersubstanz oder ein Gemisch aus mindestens zwei H-funktionellen Startersubstanzen vorgelegt und

(α2) die Temperatur der Startersubstanz oder des Gemisches auf 50 bis 200°C, bevorzugt 80 bis 160°C, besonders bevorzugt bei 100 bis 140°C gebracht wird und/oder der Druck im Reaktor auf weniger als 500 mbar, bevorzugt 5 mbar bis 100 mbar erniedrigt. Hierbei kann auch ein Stickstoff-Strom durch den Reaktor geleitet werden.

Der Doppelmetallcyanid-Katalysator kann zu der H-funktionellen Startersubstanz oder dem Gemisch von mindestens zwei H-funktionellen Startersubstanzen in Schritt (α1) oder unmittelbar anschließend an Schritt (α2) zugesetzt werden.

Der DMC-Katalysator kann in fester Form oder als Suspension in einer H-funktionellen Startersubstanz zugegeben werden. Wird der Katalysator als Suspension zugegeben, wird diese bevorzugt in Schritt (α1) der H-funktionellen Startersubstanz(en) zugefügt.

Zu Schritt (β):

Vorzugsweise erfolgt die Aktivierung (β) derart, dass

(β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β2) in einem zweiten Aktivierungsschritt nach der im vorangegangenen Aktivierungsschritt erreichten Temperaturspitze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β3) gegebenenfalls in einem dritten Aktivierungsschritt bzw. weiteren Aktivierungsschritten nach der im vorangegangenen Aktivierungsschritt erreichten Temperaturspitze der Schritt (β2) null bis fünfmal, bevorzugt ein bis viermal, besonders bevorzugt genau einmal wiederholt wird, wobei diese Zugabe der Teilmenge bzw. Zugaben der Teilmengen an Alkylenoxid unter Abwesenheit von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(β4) gegebenenfalls in einem weiteren Aktivierungsschritt bzw. weiteren Aktivierungsschritten nach der im vorangegangenen Aktivierungsschritt erreichten Temperaturspitze der Schritt (β3) ein bis fünfmal, bevorzugt ein bis viermal, besonders bevorzugt genau einmal wiederholt wird, wobei diese Zugabe der Teilmenge bzw. Zugaben der Teilmengen an Alkylenoxid in Gegenwart von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird.

In einer bevorzugten Ausführungsform beträgt die bei der Aktivierung in den Schritten β1 bis β4 jeweils eingesetzte Teilmenge von einem oder mehreren Alkylenoxiden 2,0 bis 15,0 Gew.-%, bevorzugt 2,5 bis 14,0 Gew.-%, besonders bevorzugt 3,0 bis 13,0 Gew.-% (bezogen auf die Gesamtmenge der bei der Aktivierung und Copolymerisation eingesetzten Menge an Alkylenoxiden)).

Die Dosierung eines oder mehrerer Alkylenoxide und gegebenenfalls des Kohlendioxids erfolgt nach der Trocknung einer Startersubstanz oder der Mischung mehrerer Startersubstanzen und der Zugabe des DMC-Katalysators und/oder des Metallsalzes, die vor oder nach der Trocknung der Startersubstanz als Feststoff oder im Falle des DMC-Katalysators in Form einer Suspension zugegeben wird. Wird der DMC-Katalysator und/oder das Metallsalz nach der Trocknung der Startersubstanz zugegeben, so sollte dieser DMC-Katalysator und/oder das Metallsalz vorzugsweise getrocknet sein, beispielsweise in einem analogen Verfahren wie die Trocknung der Startersubstanz. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck(absolut) zwischen 10 mbar bis 10 bar, vorzugsweise 100 mbar bis 8 bar und bevorzugt 500 mbar bis 6 bar eingestellt wird In einer besonders bevorzugten Ausführungsform wird das aus Schritt (α) resultierende Gemisch aus einer oder mehrerer Starterverbindungen und dem DMC-Katalysator bei einer Temperatur von 100°C bis 130°C mindestens einmal, vorzugsweise dreimal mit 1,5 bar bis 10 bar (absolut), besonders bevorzugt 3 bar bis 6 bar (absolut) eines Inertgases (Stickstoff oder ein Edelgas wie beispielsweise Argon) beaufschlagt und jeweils unmittelbar anschließend bis innerhalb von 15 min wird der Überdruck auf 1 bar (absolut) reduziert. Alternativ wird in einer ebenfalls besonders bevorzugten Ausführungsform in das aus Schritt (α) resultierende Gemisch aus einer oder mehrerer Starterverbindungen und dem DMC-Katalysator bei einer Temperatur von 40°C bis 130°C Inertgas (Stickstoff oder ein Edelgas wie beispielsweise Argon) eingeleitet und gleichzeitig ein reduzierter Druck (absolut) von 10 mbar bis 800 mbar, besonders bevorzugt von 50 mbar bis 200 mbar angelegt.

Zu Schritt (γ):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen (Zugaben) erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren. Die Konzentration an freien Alkylenoxiden während der Reaktion in der Reaktionsmischung beträgt vorzugsweise > 0 bis 40 Gew.%, besonders bevorzugt > 0 - 25 Gew-%, höchst bevorzugt > 0 - 10 Gew.% (jeweils bezogen auf das Gewicht der Reaktionsmischung).

Vorzugsweise wird ein Überschuss an Kohlendioxid bezogen auf die berechnete Menge an eingebautem Kohlendioxid im Polyethercarbonatpolyol eingesetzt, d a bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 1 bis 120 bar, bevorzugt 50 bis 110 bar, besonders bevorzugt von 70 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 110 bis 120°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

Besonders bevorzugte Reaktoren sind: Rohrreaktor, Rührkessel und Schlaufenreaktor. Polyethercarbonatpolyole können in einem Rührkessel hergestellt werden, wobei gegebenenfalls der Rührkessel je nach Ausführungsform und Betriebsweise über den Reaktormantel, innenliegende und/oder in einem Umpumpkreislauf befindliche Kühlflächen gekühlt wird. Aus Sicherheitsgründen sollte der Gehalt an freiem Epoxid 15 Gew.-% im Reaktionsgemisch des Rührkessels nicht übersteigen (siehe beispielsweise WO-A 2004/081082; Seite 3; Zeile 14). Sowohl in der semi-batch Fahrweise, wo das Produkt erst nach Ende der Reaktion entnommen wird, als auch in der kontinuierlichen Fahrweise, wo das Produkt kontinuierlich entnommen wird, ist daher besonders auf die Dosiergeschwindigkeit des Epoxids zu achten. Sie ist so einzustellen, dass trotz der inhibierenden Wirkung des Kohlendioxids das Epoxid genügend schnell abreagiert. Es ist möglich, das Kohlendioxid kontinuierlich oder diskontinuierlich zuzuführen. Dies hängt davon ab, ob das Epoxid schnell genug verbraucht wird und ob das Produkt gegebenenfalls $CO_2$-freie Polyether-Blöcke enthalten soll. Die Menge des Kohlendioxids (angegeben als Druck) kann bei der Zugabe des Epoxids ebenso variieren. Es ist möglich, während der Zugabe des Epoxids den $CO_2$-Druck allmählich zu steigern oder zu senken oder gleich zu lassen.

Eine weitere mögliche Ausführungsform im Rührkessel für die Copolymerisation (Schritt $\gamma$) ist dadurch gekennzeichnet, dass eine oder mehrere H-funktionellen Starterverbindungen während der Reaktion kontinuierlich in den Reaktor zudosiert werden, wobei das eingesetzte Metallsalz gemeinsam mit dem Starter dem Verfahren zugeführt werden kann oder bereits zu Beginn der Reaktion vollständig vorgelegt wird.. Die Menge der H-funktionellen Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Starterverbindungen).

Die nach diesem Verfahren aktivierte Katalysator-Starter-Mischung kann im Rührkessel, aber auch in einem anderen Reaktionsbehältnis (Rohrreaktor oder Schlaufenreaktor) mit Epoxid und Kohlendioxid (weiter) copolymerisiert werden.

Beim Rohrreaktor werden aktivierter Katalysator und Starter sowie Epoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner überkritischen Form, also quasi flüssig, zudosiert, um eine bessere Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Selbst Schlaufenreaktoren können zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder eine Schlaufe von Rohrreaktoren. Der Einsatz eines Schlaufenreaktors ist insbesondere deshalb von Vorteil, weil hier eine Rückvermischung realisiert werden kann, so dass die Epoxid-Konzentration gering sein sollte. Um vollständigen Umsatz zu realisieren, ist häufig ein Rohr ("Verweilrohr") nachgeschaltet.

Die erfindungsgemäß erhaltenen Polyethercarbonatpolyole haben eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 20000 g/mol und besonders bevorzugt 500 bis 10000 g/mol.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxy-propyltrlisopropoxysilan. Vorzugsweise werden als Alkylenoxide Ethylenoxid und/oder Propylenoxid, insbesondere Propylenoxid eingesetzt.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ , besonders bevorzugt ist -OH. Als H-funktionelle Startersubstanz wird beispielsweise eine oder mehrere Verbindungen ausgewählt aus der Gruppe bestehend aus mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1, 4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an F,-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S 180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (IV),

$$HO\text{-}(CH_2)_x\text{-}OH \qquad (IV)$$

wobei x eine Zahl von 1 bis 20, bevorzugt eine gerade Zahl von 2 bis 20 ist. Beispiele für Alkohole gemäß Formel (IV) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (IV) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittleren Molekulargewicht größer als 500 g/mol enthalten.

Die erfindungsgemäß eingesetzten DMC-Katalysatoren werden erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen

Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuß (bezogen auf die Doppelmetallcyanidverbindung) und gegebenenfalls weitere komplexbildende Komponenten zugesetzt werden.

Die in den erfindungsgemäß eingesetzten DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuß bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuß, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (V),

$$M(X)_n \qquad (V)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalate ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M_r(X)_3 \qquad (VI)$$

wobei

M ausgewählt ist aus den Metallkationen $Fe^{3+}$, $Al^{3+}$, $Co^{3+}$ und $Cr^{3+}$,

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalate ist und

r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VII),

$$M(X)_s \qquad (VII)$$

wobei

M ausgewählt ist aus den Metallkationen $Mo^{4+}$, $V^{4+}$ und $W^{4+}$

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalate ist und

s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VIII),

$$M(X)_t \qquad (VIII)$$

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalate ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (IX)

$$(Y)_a\, M'(CN)_b(A)_c \qquad (IX)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß eingesetzten DMC-Katalysatoren enthalten sind, sind Verbindungen der allgemeinen Formel (X)

$$M_x[M'_{x'},(CN)_y]_z \qquad (X),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x=3,x'= 1,y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren

Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäß eingesetzten DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß eingesetzten DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00, und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), u m auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein bevorzugtes Verfahren zur Isolierung der erfindungsgemäß eingesetzten DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere zu Polyurethan-Weichschaumstoffen. Für Polyurethananwendungen werden vorzugsweise Polyethercarbonatpolyole eingesetzt, die auf einer H-funktionellen Startverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Polydispersität, Funktionalität und/oder Hydroxylzahl erfüllen müssen.

## <u>Beispiele</u>

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie,Teil 1 - Tetrahydrofuran als Elutionsmittel". Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Für die Angabe der Menge an eingesetztem Metallsalz wird auch das Verhältnis der eingesetzten Stoffmenge des Metallsalzes bezogen auf die eingesetzte Stoffmenge an Cobalt stammend aus dem DMC-Katalysator angegeben. Für die Berechnung der Stoffmenge an Cobalt stammend aus dem DMC-Katalysator wird ein Gewichtsanteil Co von 11,0 Gew.-% verwendet. Dieser wurde mittels Röntgenfluoreszenzanalyse bestimmt. Auf dieser Grundlage enthalten 141 mg eingesetzter DMC-Katalysator (hergestellt gemäß Beispiel 6 von WO-A 01/80994) eine Stoffmenge an Cobalt von 0,26 mmol.

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (XI) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (XI) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (XI)$$

Der Gewichtsanteil (in Gew.-%) polymer-gebundenen Carbonats (LC') in der Reaktionsmischung wurde nach

Formel (XII) berechnet,

$$LC' = \frac{[F(5,1-4,8) - F(4,5)] * 102}{N} * 100\% \qquad \text{(XII)}$$

wobei sich der Wert für N ("Nenner" N) nach Formel (XIII) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \qquad \text{(XIII)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XIV) berechnet,

$$CC' = \frac{F(4,5) * 102}{N} * 100\% \qquad \text{(XIV)}$$

wobei sich der Wert für N nach Formel (XI) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt)..

Eingesetzte H-funktionelle Starterverbindung:

1,8-Octandiol Fa. Sigma Aldrich

Herstellung eines Polyethercarbonatpolyols in Gegenwart eines DMC-Katalysators und in Abwesenheit von Metallsalzen. (**Beispiel 1; Vergleich**):

In einem 1L Druckreaktor mit Gasdosierungseinrichtung wurden 141 mg getrockneter DMC-Katalysator (hergestellt gemäß Beispiel 6 von WO-A 01/80994), sowie 51 g getrocknetes 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde mindestens 3-mal durchgeführt [**Trocknung**]. In den Reaktor wurden bei 130 °C und Abwesenheit von $CO_2$, also Null bar $CO_2$, 25 g Propylenoxid (PO) eindosiert. Das Anspringen der Reaktion machte sich durch eine Temperaturspitze ("hotspot") und durch Druckabfall auf den Ausgangsdruck (ca. 1 bar) bemerkbar **[Aktivierung 1]**. Nach dem ersten Druckabfall wurden 20 g PO **[Aktivierung 2]** und dann 19 g PO schnell eindosiert **[Aktivierung 3]**, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert **[Aktivierung 4]**, wodurch es nach einer Wartezeit von 33 Minuten zu einer Temperaturspitze kam. Gleichzeitig dazu fing der Druck an Kohlendioxid $CO_2$ zu fallen an. Der Druck wurde so geregelt, dass bei Absinken neues $CO_2$ zugegeben wurde. Erst danach wurde das restliche Propylenoxid (435 g) kontinuierlich mit ca. 1,8 g/min in den Reaktor gepumpt, während in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min).

Das so hergestellte Polyethercarbonatpolyol zeichnet sich durch folgende Eigenschaften aus: Eingebautes $CO_2$ [Gew.%] bezogen auf den Teil des Polymers, der unter $CO_2$ gebildet wurde: 19,9 Gew.%; Selektivität angegeben als Verhältnis cyclisches Carbonat (unerwünschtes Nebenprodukt) zu Polyethercarbonatpolyol = 0,21; OH-Zahl des Polyethercarbonatpolyols war 67,2 mg/g; Polydispersität 1,45.

Herstellung eines Polyethercarbonatpolyols in Gegenwart eines DMC-Katalysators und eines Metallsalzes (**allgemeine Herstellvorschrift**):

In einem 1L Druckreaktor mit Gasdosierungseinrichtung wurden 141 mg getrockneter DMC-Katalysator (hergestellt gemäß EP-A 700949), ein Metallsalz in der in Tabelle 1 angegebenen Art und Menge, sowie 51 g getrocknetes 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde mindestens 3-mal durchgeführt **[Trocknung]**. Ggf. kann die Inertisierung des Reaktionsgemisches auch mittels $N_2$-Strippen durchgeführt werden. In den Reaktor wurden bei 130 °C und Abwesenheit von $CO_2$, also Null bar $CO_2$, 25 g Propylenoxid (PO) eindosiert. Das Anspringen der Reaktion machte sich durch eine Temperaturspitze ("hotspot") und durch Druckabfall auf den Ausgangsdruck (ca. 1 bar) bemerkbar **[Aktivierung 1]**. Nach dem ersten Druckabfall wurden 20 g PO **[Aktivierung 2]** und dann 19 g PO schnell eindosiert **[Aktivierung 3]**, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert **[Aktivierung 4]**, wodurch es nach einer Wartezeit zu einer Temperaturspitze kam. Gleichzeitig dazu fing der Druck an Kohlendioxid $CO_2$ zu fallen an. Der Druck wurde so geregelt, dass bei Absinken neues $CO_2$ zugegeben wurde. Erst danach wurde das restliche Propylenoxid (435 g) kontinuierlich mit ca. 1,8 g/min in den Reaktor gepumpt, während in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min).

Herstellung eines Polyethercarbonatpolyols in Anwesenheit von 49 mg Calciumchlorid (**Beispiel 2**, erfindungsgemäß):

Die Durchführung erfolgte gemäß der oben angegebenen allgemeinen Herstellvorschrift, wobei als Metallsalz Calciumchlorid zusammen mit Katalysator und 1,8 Octandiol (Starter) als Feststoff vorgelegt wurde.

Die Zeit bis zum Hotspot unter $CO_2$ [Aktivierung 4] betrug 27 Minuten.

Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 21,3 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 65,5 mg/g;
Polydispersität betrug 1,48.

Herstellung eines Polyethercarbonatpolyols in Anwesenheit von 141 mg Calciumchlorid (**Beispiel 3**, erfindungsgemäß):

Die Durchführung erfolgte gemäß der oben angegebenen allgemeinen Herstellvorschrift, wobei als Metallsalz Calciumchlorid zusammen mit Katalysator und 1,8 Octandiol (Starter) als Feststoff vorgelegt wurde.

Die Zeit bis zum Hotspot unter $CO_2$ [Aktivierung 4] betrug 49 Minuten.

Das so hergestellte Polyethercarbonatpolyol zeichnet sich durch folgende Eigenschaften aus:

Der Einbau $CO_2$ [Gew.%] bezogen auf den Teil des Polymers, der unter $CO_2$ gebildet wurde, betrug 23,1 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 63,3 mg/g;
Polydispersität betrug 1,72.

Herstellung eines Polyethercarbonatpolyols in Anwesenheit von 42 mg Magnesiumchlorid (Beispiel 4, erfindungsgemäß):

Die Durchführung erfolgte gemäß der oben angegebenen allgemeinen Herstellvorschrift, wobei als Metallsalz Magnesiumchlorid zusammen mit Katalysator und 1,8 Octandiol (Starter) als Feststoff vorgelegt wurde.

Die Zeit bis zum Hotspot unter $CO_2$ [Aktivierung 4] betrug 24 Minuten.

Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 21,6 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 65,5 mg/g;
Polydispersität betrug 1,48.

Herstellung eines Polyethercarbonatpolyols in Anwesenheit von 141 mg Magnesiumchlorid (Beispiel 5, erfindungsgemäß):

Die Durchführung erfolgte gemäß der oben angegebenen allgemeinen Herstellvorschrift, wobei als Metallsalz Magnesiumchlorid zusammen mit Katalysator und 1,8 Octandiol (Starter) als Feststoff vorgelegt wurde.

Die Zeit bis zum Hotspot unter $CO_2$ [Aktivierung 4] betrug 58 Minuten.

Das so hergestellte Polyethercarbonatpolyol zeichnet sich durch folgende Eigenschaften aus:

Der Einbau $CO_2$ [Gew.%] bezogen auf den Teil des Polymers, der unter $CO_2$ gebildet wurde, betrug 23,3 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 67,4 mg/g;
Polydispersität betrug 1,45 auf 1,72.

Herstellung eines Polyethercarbonatpolyols in Anwesenheit von 260 mg Magnesiumdistearat (Beispiel 6, erfindungsgemäß):

Die Durchführung erfolgte gemäß der oben angegebenen allgemeinen Herstellvorschrift, wobei als Metallsalz Magnesiumdistearat (Magnesiumstearat) zusammen mit Katalysator und 1,8 Octandiol (Starter) als Feststoff vorgelegt wurde.

Die Zeit bis zum Hotspot unter $CO_2$ [Aktivierung 4] verkürzte sich von 33 Minuten auf 18 Minuten.

Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde, betrug 21,4 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 64,5 mg/g;
Polydispersität betrug 1,61.

Herstellung eines Polyethercarbonatpolyols in Anwesenheit von 390 mg Aluminiumtristearat (Beispiel 7, erfindungsgemäß):

Die Durchführung erfolgte gemäß der oben angegebenen allgemeinen Herstellvorschrift, wobei als Metallsalz Aluminiumtristearat (Aluminiumstearat) zusammen mit Katalysator und 1,8 Octandiol (Starter) als Feststoff vorgelegt wurde.

Die Zeit bis zum Hotspot unter $CO_2$ [Aktivierung 4] betrug 19 Minuten.

Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde, betrug 23,1 Gew.%;
Selektivität angegeben als Verhältnis cyclisches Carbonat (unerwünschtes Nebenprodukt) zu Polyethercarbonatpolyol betrug 0,15;
OH-Zahl des Polyethercarbonatpolyol betrug 63,3 mg/g;
Polydispersität betrug 1,86.

Herstellung eines Polyethercarbonatpolyols in Anwesenheit von 65 mg getrocknetem Magnesiumacetat (Beispiel 8, erfindungsgemäß):

Die Durchführung erfolgte gemäß der oben angegebenen allgemeinen Herstellvorschrift, wobei als Metallsalz Magnesiumacetat zusammen mit Katalysator und 1,8 Octandiol (Starter) als Feststoff vorgelegt wurde.

Die Zeit bis zum Hotspot unter $CO_2$ [Aktivierung 4] verkürzte sich von 33 Minuten auf 16 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde, betrug 20,7 Gew.%;
Selektivität angegeben als Verhältnis cyclisches Carbonat (unerwünschtes Nebenprodukt) zu Polyethercarbonatpolyol betrug 0,14;
OH-Zahl des Polyethercarbonatpolyols betrug 62,2 mg/g.
Polydispersität betrug 1,43.

Herstellung eines Polyethercarbonatpolyols in Anwesenheit von 270 mg getrocknetem Calciumstearat (**Beispiel 9**, erfindungsgemäß):

Die Durchführung erfolgte gemäß der oben angegebenen allgemeinen Herstellvorschrift, wobei als Metallsalz Calciumstearat zusammen mit Katalysator und 1,8 Octandiol (Starter) als Feststoff vorgelegt wurde.

Die Zeit bis zum Hotspot unter $CO_2$ [Aktivierung 4] verkürzte sich von 33 Minuten auf 15 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde, betrug 20,3 Gew.%;
Selektivität angegeben als Verhältnis cyclisches Carbonat (unerwünschtes Nebenprodukt) zu Polyethercarbonatpolyol betrug 0,12;
OH-Zahl des Polyethercarbonatpolyols betrug 62,9 mg/g.
Polydispersität betrug 1,31.

Herstellung eines Polyethercarbonatpolyols in Anwesenheit von 405 mg getrocknetem Calciumstearat (**Beispiel 10**, erfindungsgemäß):

Die Durchführung erfolgte gemäß der oben angegebenen allgemeinen Herstellvorschrift, wobei als Metallsalz Calciumstearat zusammen mit Katalysator und 1,8 Octandiol (Starter) als Feststoff vorgelegt wurde.

Die Zeit bis zum Hotspot unter $CO_2$ [Aktivierung 4] verkürzte sich von 33 Minuten auf 15 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde, betrug 20,2 Gew.%;
Selektivität angegeben als Verhältnis cyclisches Carbonat (unerwünschtes Nebenprodukt) zu Polyethercarbonatpolyol betrug 0,10;
OH-Zahl des Polyethercarbonatpolyols betrug 64,3 mg/g;
Polydispersität betrug 1,47.

Herstellung eines Polyethercarbonatpolyols in Anwesenheit von 280 mg Zinkdistearat (Beispiel 11, Vergleich, nicht erfindungsgemäß):

Die Durchführung erfolgte gemäß der oben angegebenen allgemeinen Herstellvorschrift, wobei als Metallsalz Zinkdistearat (Zinkstearat) zusammen mit Katalysator und 1,8 Octandiol (Starter) als Feststoff vorgelegt wurde.

Die Zeit bis zum Hotspot unter $CO_2$ [Aktivierung 4] betrug 55 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 19,0;
Selektivität angegeben als Verhältnis cyclisches Carbonat (unerwünschtes Nebenprodukt) zu Polyethercarbonatpolyol betrug 0,23;
OH-Zahl des Polyethercarbonatpolyols betrug 66,4 mg/g;

Polydispersität betrug 1,47.

Herstellung eines Polyethercarbonatpolyols in Anwesenheit von 36 mg Zinkoxid (Beispiel 12, Vergleichsbeispiel):

Die Durchführung erfolgte gemäß der oben angegebenen allgemeinen Herstellvorschrift, wobei als Metallsalz Zinkoxid zusammen mit Katalysator und 1,8 Octandiol (Starter) als Feststoff vorgelegt wurde.

Die Zeit bis zum Hotspot unter $CO_2$ [Aktivierung 4] betrug 34 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 20,0 Gew.%;
Selektivität angegeben als Verhältnis cyclisches Carbonat (unerwünschtes Nebenprodukt) zu Polyethercarbonatpolyol betrug 0,19;
OH-Zahl des Polyethercarbonatpolyols betrug 67,9 mg/g;
Polydispersität betrug 1,52.

Herstellung eines Polyethercarbonatpolyols in Anwesenheit von 60 mg Zinkchlorid (Beispiel 13, Vergleichsbeispiel):

Die Durchführung erfolgte gemäß der oben angegebenen allgemeinen Herstellvorschrift, wobei als Metallsalz Zinkchlorid zusammen mit Katalysator und 1,8 Octandiol (Starter) als Feststoffvorgelegt wurde.

Die Zeit bis zum Hotspot unter $CO_2$ [Aktivierung 4] betrug 59 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 18,6 Gew.%;
Selektivität angegeben als Verhältnis cyclisches Carbonat (unerwünschtes Nebenprodukt) zu Polyethercarbonatpolyol betrug 0,26;
OH-Zahl des Polyethercarbonatpolyols betrug 71,0 mg/g;
Polydispersität betrug 1,40.

Herstellung eines Polyethercarbonatpolyols in Anwesenheit von 58 mg Aluminiumtrichlorid (**Beispiel 14**, Vergleichsbeispiel):

Die Durchführung erfolgte gemäß der oben angegebenen allgemeinen Herstellvorschrift, wobei als Metallsalz Aluminiumtrichlorid zusammen mit Katalysator und 1,8 Octandiol (Starter) als Feststoff vorgelegt wurde.

Innerhalb von 165 Minuten wurde kein Hotspot unter $CO_2$ [Aktivierung 4] beobachtet. Der Versuch wurde abgebrochen.
Herstellung eines Polyethercarbonatpolyols in Anwesenheit von 98 mg Magnesiumperchlorat (**Beispiel 15**, Vergleichsbeispiel):

Die Durchführung erfolgte gemäß der oben angegebenen allgemeinen Herstellvorschrift, wobei als Metallsalz Magnesiumperchlorat zusammen mit Katalysator und 1,8 Octandiol (Starter) als Feststoff vorgelegt wurde.

Die Zeit bis zum Hotspot unter $CO_2$ [Aktivierung 4] betrug 80 Minuten. Während der kontinuierlichen Dosierung von PO unter 50 bar $CO_2$ wurde ein stark erhöhter Wert von 65% freiem PO festgestellt. Der Versuch wurde deswegen abgebrochen.
Herstellung eines Polyethercarbonatpolyols in Anwesenheit von 53 mg Magnesiumsulfat (**Beispiel 16**, Vergleichsbeispiel):

Die Durchführung erfolgte gemäß der oben angegebenen allgemeinen Herstellvorschrift, wobei als Metallsalz Magnesiumsulfat zusammen mit Katalysator und 1,8 Octandiol (Starter) als Feststoff vorgelegt wurde.

Die Zeit bis zum Hotspot unter $CO_2$ [Aktivierung 4] betrug 22 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 19,5 Gew.%;
Selektivität angegeben als Verhältnis cyclisches Carbonat (unerwünschtes Nebenprodukt) zu Polyethercarbonatpolyol blieb gleich (0,21);
OH-Zahl des Polyethercarbonatpolyols betrug 68,5 mg/g;
Polydispersität betrug 1,36.

Herstellung eines Polyethercarbonatpolyols in Anwesenheit von 62 mg Natriumsulfat (Beispiel 17, Vergleichsbeispiel):

Die Durchführung erfolgte gemäß der oben angegebenen allgemeinen Herstellvorschrift, wobei als Metallsalz Natriumsulfat zusammen mit Katalysator und 1,8 Octandiol (Starter) als Feststoff vorgelegt wurde.

Die Zeit bis zum Hotspot unter $CO_2$ [Aktivierung 4] betrug 27 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 19,7 Gew.%;
Selektivität angegeben als Verhältnis cyclisches Carbonat (unerwünschtes Nebenprodukt) zu Polyethercarbonatpolyol betrug 0,18;
OH-Zahl des Polyethercarbonatpolyols war 68,4 mg/g;
Polydispersität betrug 1,38.

Herstellung eines Polyethercarbonatpolyols in Anwesenheit von 125 mg Stearinsäure (**Beispiel 18**, Vergleichsbeispiel):

Die Durchführung erfolgte gemäß der oben angegebenen allgemeinen Herstellvorschrift, wobei als Metallsalz Stearinsäure zusammen mit Katalysator und 1,8 Octandiol (Starter) als Feststoff vorgelegt wurde.

Die Zeit bis zum Hotspot unter $CO_2$ [Aktivierung 4] betrug 29 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 20,4 Gew.%;
Selektivität angegeben als Verhältnis cyclisches Carbonat (unerwünschtes Nebenprodukt) zu Polyethercarbonatpolyol betrug 0,20;
OH-Zahl des Polyethercarbonatpolyols betrug 65,5 mg/g;
Polydispersität betrug 1,42.

Herstellung eines Polyethercarbonatpolyols in Anwesenheit von 51 mg Natriumphenolat (**Beispiel 19**, Vergleichsbeispiel):

Die Durchführung erfolgte gemäß der oben angegebenen allgemeinen Herstellvorschrift, wobei als Metallsalz Natriumphenolat zusammen mit Katalysator und 1,8 Octandiol (Starter) als Feststoff vorgelegt wurde.

Innerhalb von 70 Minuten wurde kein Hotspot unter $CO_2$-freien Bedingungen [Aktivierung 1] beobachtet. Die Zugabe einer weiteren Menge PO analog [Aktivierung 2] führte ebenfalls nicht zu einer Aktivierung des Katalysators. Der Versuch wurde abgebrochen.
Herstellung eines Polyethercarbonatpolyols in Anwesenheit von 190 mg Tetraphenylphosphoniumphenolat (**Beispiel 20**, Vergleichsbeispiel):

Die Durchführung erfolgte gemäß der oben angegebenen allgemeinen Herstellvorschrift, wobei als Metallsalz Tetraphenylphosphoniumphenolat zusammen mit Katalysator und 1,8 Octandiol (Starter) als Feststoff vorgelegt wurde.

Die Zeit bis zum Hotspot unter $CO_2$ [Aktivierung 4] betrug 29 Minuten.
Das so hergestellte Polyethercarbonatpolyol zeichnet sich durch folgende Eigenschaften aus:

Einbau $CO_2$ [Gew.%] bezogen auf den Teil des Polymers, der unter $CO_2$ gebildet wurde: 20,0 Gew.%;
Selektivität angegeben als Verhältnis cyclisches Carbonat (unerwünschtes Nebenprodukt) zu Polyethercarbonatpolyol betrug 0,20;
OH-Zahl des Polyethercarbonatpolyols betrug 65,5 mg/g;

Polydispersität betrug 1,28.

Herstellung eines Polyethercarbonatpolyols in Anwesenheit von 19 mg Lithiumchlorid (**Beispiel 21**, Vergleich, nicht erfindungsgemäß):

Die Durchführung erfolgte gemäß der oben angegebenen allgemeinen Herstellvorschrift, wobei als Metallsalz Lithiumchlorid zusammen mit Katalysator und 1,8 Octandiol (Starter) als Feststoff vorgelegt wurde.

Innerhalb von 140 Minuten wurde kein Hotspot unter $CO_2$ [Aktivierung 4] beobachtet. Der Versuch wurde abgebrochen.

Herstellung eines Polyethercarbonatpolyols in Anwesenheit von 135 mg Natriumstearat (**Beispiel 22**, Vergleich, nicht erfindungsgemäß):

Die Durchführung erfolgte gemäß der oben angegebenen allgemeinen Herstellvorschrift, wobei als Metallsalz Natriumstearat zusammen mit Katalysator und 1,8 Octandiol (Starter) als Feststoff vorgelegt wurde.
Innerhalb von 120 Minuten wurde kein Hotspot unter $CO_2$ [Aktivierung 4] beobachtet. Der Versuch wurde abgebrochen.

Herstellung eines Polyethercarbonatpolyols in Anwesenheit von 300 mg Zinn(di)stearat (**Beispiel 23**, Vergleichsbeispiel):

Die Durchführung erfolgte gemäß der oben angegebenen allgemeinen Herstellvorschrift, wobei als Metallsalz Zinnstearat zusammen mit Katalysator und 1,8 Octandiol (Starter) als Feststoff vorgelegt wurde.
Innerhalb von 120 Minuten wurde kein Hotspot unter $CO_2$ [Aktivierung 4] beobachtet. Der Versuch wurde abgebrochen.

In Tabelle 1 sind die Resultate der Polyethercarbonatpolyol-Herstellung zusammengefasst.

Zinkverbindungen wie Zinkstearat, Zinkoxid oder Zinkchlorid führten nicht zu einem erhöhten Einbau von $CO_2$ in das Polymer (siehe Vergleichsbeispiele 11 bis 13). Mit den Chloriden von Aluminium und Lithium konnte keine Aktivierung des Katalysators in Gegenwart von Kohlendioxid erreicht werden (siehe Vergleichsbeispiele 14 und 21).

Dagegen erhöhten überraschenderweise die Erdalkalichloride wie Magnesiumchlorid oder Calciumchlorid den Einbau von Kohlendioxid in das Polymer und verbessern gleichzeitig die Selektivität (siehe Beispiele 2 bis 5) gegenüber dem Vergleichsbeispiel 1, bei dem kein Metallsalz zugesetzt wurde. Magnesiumstearat, Magnesiumacetat und Aluminiumstearat erhöhten den $CO_2$-Gehalt im Polymer, verbesserten die Selektivität und verkürzten die Aktivierungszeit (Beispiele 6 bis 8). Mit Calciumstearat als Metallsalz konnte die optimale Kombination aus erhöhtem $CO_2$-Gehalt im Polymer, verbesserter Selektivität, verkürzter Aktivierungszeit und erniedrigter Polydispersität erreicht werden (Beispiele 9 und 10).

Magnesiumperchlorat beeinflusste den Katalysator so nachteilig, dass eine erfolgreiche Herstellung des Polymers nicht möglich war (Vergleichsbeispiel 15). Mit anderen Metallsalzen wie Magnesium-oder Natriumsulfat konnte zwar eine Copolymerisation erreicht werden, jedoch führten diese Metallsalze nicht zu einem erhöhten Einbau von $CO_2$ in das Polymer (siehe Vergleichsbeispiele 16 und 17). Mit Natriumphenolat wurde keine Aktivierung des Katalysators in Anwesenheit von Kohlendioxid erreicht (Vergleichsbeispiel 19) und bei Tetraphenylphosphoniumphenolat wurde die Selektivität nicht verbessert (Vergleichsbeispiel 20).

Stearinsäure hatte lediglich einen leicht positiven Einfluss auf den Einbau von Kohlendioxid in das Polymer, jedoch wurde die Selektivität ungünstig beeinflusst (Vergleichsbeispiel 18). Mit den Metallsalzen wie Natriumstearat oder Zinn(II)stearat konnte keine Aktivierung unter Kohlendioxid erreicht werden (Vergleichsbeispiele 22 und 23).

Tabelle 1: Resultate der Polyethercarbonatpolyol-Herstellung

| Beispiel | Metallsalz | Metallsalz [mmol] | [mmol Metallsalz] / [mmol Co] | Zeit 1 [min] | CO2 Einbau [Gew.%] | Selektivität cyclisch/linear | OH-Zahl [mg KOH/g] | Polydispersität |
|---|---|---|---|---|---|---|---|---|
| **1 (Vgl.)** | - | - | - | 33 | 19,9 | 0,21 | 67,2 | 1,45 |
| **2** | Calciumchlorid | 0,44 | 1,67 | 27 | 21,3 | 0,14 | 65,5 | 1,48 |
| **3** | Calciumchlorid | 1,27 | 4,82 | 49 | 23,1 | 0,14 | 63,3 | 1,72 |
| **4** | Magnesiumchlorid | 0,44 | 1,67 | 24 | 21,6 | 0,14 | 65,5 | 1,48 |
| **5** | Magnesiumchlorid | 1,48 | 5,62 | 58 | 23,3 | 0,14 | 67,4 | 1,72 |
| **6** | Magnesiumstearat | 0,44 | 1,67 | 18 | 21,4 | 0,14 | 64,5 | 1,61 |
| **7** | Aluminiumstearat | 0,44 | 1,67 | 19 | 23,1 | 0,15 | 63,3 | 1,86 |
| **8** | Magnesiumacetat | 0,44 | 1,67 | 16 | 20,7 | 0,14 | 62,2 | 1,43 |
| **9** | Calciumstearat | 0,44 | 1,67 | 15 | 20,3 | 0,12 | 62,9 | 1,31 |
| **10** | Calciumstearat | 0,67 | 2,54 | 15 | 20,2 | 0,10 | 64,3 | 1,37 |
| **11 (Vgl.)** | Zinkstearat | 0,44 | 1,67 | 55 | 19,0 | 0,23 | 66,4 | 1,47 |
| **12 (Vgl.)** | Zinkoxid | 0,44 | 1,67 | 34 | 20,0 | 0,19 | 67,9 | 1,52 |
| **13 (Vgl.)** | Zinkchlorid | 0,44 | 1,67 | 59 | 18,6 | 0,26 | 71,0 | 1,40 |
| **14 (Vgl.)** | Aluminiumchlorid | 0,44 | 1,67 | 165 | keine Aktivierung unter $CO_2$ innerhalb von zwei Stunden | | | |
| **15 (Vgl.)** | Magnesiumperchlorat | 0,44 | 1,67 | 80 | Akkumulation von PO, daher Abbruch | | | |
| **16 (Vgl.)** | Magnesiumsulfat | 0,44 | 1,67 | 22 | 19,5 | 0,21 | 68,5 | 1,36 |
| **17 (Vgl.)** | Natriumsulfat | 0,44 | 1,67 | 27 | 19,7 | 0,18 | 68,4 | 1,38 |
| **18 (Vgl.)** | Stearinsäure | 0,44 | 1,67 | 29 | 20,4 | 0,20 | 65,5 | 1,42 |
| **19 (Vgl.)** | Natriumphenolat | 0,44 | 1,67 | keine Aktivierung unter CO2-freien Bedingungen innerhalb 70 min | | | | |
| **20 (Vgl.)** | Tetraphenylphosphoniumphenolat | 0,44 | 1,67 | 29 | 20,0 | 0,20 | 65,5 | 1,28 |
| **21 (Vgl.)** | Lithiumchlorid | 0,44 | 1,67 | keine Aktivierung unter CO2 innerhalb von 140 Minuten | | | | |
| **22 (Vgl.)** | Natriumstearat | 0,44 | 1,67 | keine Aktivierung unter CO2 innerhalb von zwei Stunden | | | | |
| **23 (Vgl.)** | Zinndistearat | 0,44 | 1,67 | keine Aktivierung unter CO2 innerhalb von zwei Stunden | | | | |
| Vgl. = Vergleichsbeispiel | | | | | | | | |

## Patentansprüche

1. Verfahren zur Herstellung von Polyethercarbonatpolyolen aus einer oder mehrerer H-funktionellen Startsubstanzen, eines oder mehrerer Alkylenoxiden und Kohlendioxid in Gegenwart eines Doppelmetallcyanid-Katalysators und in Gegenwart wenigstens eines Metallsalzes, **dadurch gekennzeichnet, dass**

   (α) der Doppelmetallcyanid-Katalysator, das Metallsalz und die H-funktionelle Startersubstanz oder ein Gemisch aus mindestens zwei H-funktionellen Startersubstanzen vorgelegt werden,
   (β) zur Aktivierung
   (β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehrerer Alkylenoxiden zu der aus Schritt (α) resultierenden Mischung zugesetzt wird, wobei diese Zugabe der Teilmenge an Alkylenoxid gegebenenfalls in Gegenwart von $CO_2$ erfolgen kann,
   (β2) in einem zweiten Aktivierungsschritt nach der im vorangegangenen Aktivierungsschritt erreichten Temperaturspitze eine zweite Teilmenge (bezogen auf die Gesamtmenge der bei der Aktivierung und Copolymerisation eingesetzten Menge an Alkylenoxiden) von einem oder mehrerer Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, und
   (γ) ein oder mehrere Alkylenoxide und Kohlendioxid zu der aus Schritt (β) resultierenden Mischung zugesetzt werden ("Copolymerisation"),

   wobei als Metallsalz mindestens eine Verbindung ausgewählt aus der Gruppe bestehend aus Erdalkalihalogenide, Erdalkalicarboxylate oder Aluminiumcarboxylate eingesetzt wird.

2. Verfahren gemäß Anspruch 1, wobei die Copolymerisation unter einem Gesamtdruck (absolut) von 50 bis 110 bar durchgeführt wird.

3. Verfahren gemäß Anspruch 1, wobei zur Aktivierung

   (β3) in einem dritten Aktivierungsschritt bzw. weiteren Aktivierungsschritten nach der im vorangegangenen Aktivierungsschritt erreichten Temperaturspitze der Schritt (β2) ein bis fünfmal wiederholt wird, wobei diese Zugabe der Teilmenge bzw. Zugaben der Teilmengen an Alkylenoxid unter Abwesenheit von $CO_2$ erfolgt.

4. Verfahren gemäß Anspruch 3, wobei zur Aktivierung

   (β4) in einem weiteren Aktivierungsschritt bzw. weiteren Aktivierungsschritten nach der im vorangegangenen Aktivierungsschritt erreichten Temperaturspitze der Schritt (β3) ein bis fünfmal wiederholt wird, wobei diese Zugabe der Teilmenge bzw. Zugaben der Teilmengen an Alkylenoxid in Gegenwart von $CO_2$ erfolgt.

5. Verfahren gemäß Anspruch 4, wobei

   (α) der Doppelmetallcyanid-Katalysator, wenigstens ein Metallsalz und die H-funktionelle Startersubstanz oder ein Gemisch aus mindestens zwei H-funktionellen Startersubstanzen vorgelegt werden,
   (β) zur Aktivierung

      (β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehrerer Alkylenoxiden zu der aus Schritt (α) resultierenden Mischung zugesetzt wird, wobei diese Zugabe der Teilmenge an Alkylenoxid unter Abwesenheit von $CO_2$ erfolgt,
      (β2) in einem zweiten Aktivierungsschritt nach der im vorangegangenen Aktivierungsschritt erreichten Temperaturspitze eine zweite Teilmenge (bezogen auf die Gesamtmenge der bei der Aktivierung und Copolymerisation eingesetzten Menge an Alkylenoxiden) von einem oder mehrerer Alkylenoxiden zu der aus dem vorangegangenen Aktivierungsschritt resultierenden Mischung zugesetzt wird, wobei diese Zugabe der Teilmenge an Alkylenoxid unter Abwesenheit von $CO_2$ erfolgt,
      (β3) in einem dritten Aktivierungsschritt nach der im vorangegangenen Aktivierungsschritt erreichten Temperaturspitze der Schritt (β2) genau einmal wiederholt wird, wobei diese Zugabe der Teilmenge bzw. Zugaben der Teilmengen an Alkylenoxid unter Abwesenheit von $CO_2$ erfolgt,
      (β4) in einem weiteren Aktivierungsschritt bzw. weiteren Aktivierungsschritten nach der im vorangegangenen Aktivierungsschritt erreichten Temperaturspitze der Schritt (β3) genau einmal wiederholt wird, wobei diese Zugabe der Teilmenge bzw. Zugaben der Teilmengen an Alkylenoxid in Gegenwart von $CO_2$ erfolgt, (γ) ein oder mehrere Alkylenoxide und Kohlendioxid zu der aus Schritt (β) resultierenden Mischung zugesetzt werden ("Copolymerisation").

**6.** Verfahren gemäß einem der Ansprüche 1 bis 5, wobei

(α) die H-funktionelle Startersubstanz oder ein Gemisch aus mindestens zwei H-funktionellen Startersubstanzen vorgelegt und Wasser und/oder andere leicht flüchtige Verbindungen durch erhöhte Temperatur und/oder reduziertem Druck entfernt werden ("Trocknung"), wobei der Doppelmetallcyanid-Katalysator und/oder wenigestens ein Metallsalz der H-funktionellen Startersubstanz oder dem Gemisch von mindestens zwei H-funktionellen Startersubstanzen vor oder nach der Trocknung zugesetzt wird.

**7.** Verfahren gemäß einem der Ansprüche 1 bis 6, wobei die bei der Aktivierung in den Schritten β1 bis β4 jeweils eingesetzte Teilmenge von einem oder mehrerer Alkylenoxiden 2,0 bis 15,0 Gew.% (bezogen auf die Gesamtmenge der bei der Aktivierung und Copolymerisation eingesetzten Menge an Alkylenoxiden) beträgt.

**8.** Verfahren gemäß einem der Ansprüche 1 bis 7, wobei die Menge der eingesetzten Metallsalze von 0,2 bis 10,0 [mmol Metallsalz] / [mmol Co] beträgt.

**9.** Verfahren gemäß einem der Ansprüche 1 bis 8, wobei als Metallsalz Magnesiumhalogenid in einer Menge von 0,8 bis 4,0 [mmol Metallsalz] / [mmol Co], Erdalkalicarboxylat und/oder Aluminiumcarboxylat eingesetzt wird.

**10.** Verfahren gemäß einem der Ansprüche 1 bis 8, wobei als Metallsalz Calciumcarboxylat eingesetzt wird.

**11.** Verfahren gemäß einem der Ansprüche 1 bis 10, wobei die eingesetzten H-funktionellen Startersubstanzen ausgewählt sind aus mindestens einer der Gruppe bestehend aus Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine, Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten.

**12.** Verfahren gemäß einem der Ansprüche 1 bis 11, wobei der eingesetzte Doppelmetallcyanid-Katalysator mindestens eine Doppelmetallcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

**13.** Verfahren gemäß Anspruch 12, wobei der eingesetzte Doppelmetallcyanid-Katalysator zusätzlich mindestens einen organischen Komplexliganden ausgewählt aus der Gruppe bestehend aus aliphatischem Ether, Ethanol, Isopropanol, n-Butanol, iso-Butanol, sek.-Buta-nol, tert-Butanol, 2-Methyl-3-buten-2-ol, 2-Methyl-3-butin-2-ol, Ethylenglykol-mono-tert.-butylether, Diethylenglykol-mono-tert.-butylether, Tripropylenglykol-mono-methylether und 3-Methyl-3-oxetan-methanol enthält.

**14.** Verfahren gemäß einem der Ansprüche 1 bis 13, welches in einem Rohrreaktor, Rührkessel oder Schlaufenreaktor durchgeführt wird.

## Claims

**1.** Process for the preparation of polyether carbonate polyols from one or more H-functional starter substances, one or more alkylene oxides and carbon dioxide in the presence of a double metal cyanide catalyst and in the presence of at least one metal salt, **characterised in that**

(α) the double metal cyanide catalyst, the metal salt and the H-functional starter substance, or a mixture of at least two H-functional starter substances, are placed in a reaction vessel,
(β) for activation
(β1) in a first activation step, a first partial amount (based on the total amount of the amount of alkylene oxides used in the activation and copolymerisation) of one or more alkylene oxides is added to the mixture resulting

from step (α), wherein this addition of the partial amount of alkylene oxide can optionally take place in the presence of $CO_2$,
(β2) in a second activation step, after the temperature peak reached in the preceding activation step, a second partial amount (based on the total amount of the amount of alkylene oxides used in the activation and copolymerisation) of one or more alkylene oxides is added to the mixture resulting from the preceding activation step, wherein this addition of the partial amount of alkylene oxide can optionally take place in the presence of $CO_2$, and
(γ) one or more alkylene oxides and carbon dioxide are added to the mixture resulting from step (β) ("copolymerisation"),

wherein there is used as the metal salt at least one compound selected from the group consisting of alkaline earth halides, alkaline earth carboxylates and aluminium carboxylates.

**2.** Process according to claim 1, wherein the copolymerisation is carried out under a total pressure (absolute) of from 50 to 110 bar.

**3.** Process according to claim 1, wherein for the activation (β3) in a third activation step, or further activation steps, after the temperature peak reached in the preceding activation step, step (β2) is repeated from one to five times, wherein this addition of the partial amount, or these additions of the partial amounts, of alkylene oxide take(s) place in the absence of $CO_2$.

**4.** Process according to claim 3, wherein for the activation (β4) in a further activation step, or further activation steps, after the temperature peak reached in the preceding activation step, step (β3) is repeated from one to five times, wherein this addition of the partial amount, or these additions of the partial amounts, of alkylene oxide take(s) place in the presence of $CO_2$.

**5.** Process according to claim 4, wherein

(α) the double metal cyanide catalyst, at least one metal salt and the H-functional starter substance, or a mixture of at least two H-functional starter substances, are placed in a reaction vessel,
(β) for activation
(β1) in a first activation step, a first partial amount (based on the total amount of the amount of alkylene oxides used in the activation and copolymerisation) of one or more alkylene oxides is added to the mixture resulting from step (α), wherein this addition of the partial amount of alkylene oxide takes place in the absence of $CO_2$,
(β2) in a second activation step, after the temperature peak reached in the preceding activation step, a second partial amount (based on the total amount of the amount of alkylene oxides used in the activation and copolymerisation) of one or more alkylene oxides is added to the mixture resulting from the preceding activation step, wherein this addition of the partial amount of alkylene oxide takes place in the absence of $CO_2$,
(β3) in a third activation step, after the temperature peak reached in the preceding activation step, step (β2) is repeated exactly once, wherein this addition of the partial amount, or these additions of the partial amounts, of alkylene oxide take(s) place in the absence of $CO_2$,
(β4) in a further activation step, or further activation steps, after the temperature peak reached in the preceding activation step, step (β3) is repeated exactly once, wherein this addition of the partial amount, or these additions of the partial amounts, of alkylene oxide take(s) place in the presence of $CO_2$,
(γ) one or more alkylene oxides and carbon dioxide are added to the mixture resulting from step (β) ("copolymerisation").

**6.** Process according to any one of claims 1 to 5, wherein

(α) the H-functional starter substance, or a mixture of at least two H-functional starter substances, is placed in a reaction vessel and water and/or other readily volatile compounds are removed by elevated temperature and/or reduced pressure ("drying"), wherein the double metal cyanide catalyst and/or at least one metal salt is added to the H-functional starter substance, or to the mixture of at least two H-functional starter substances, before or after the drying.

**7.** Process according to any one of claims 1 to 6, wherein the partial amount of one or more alkylene oxides used in the activation in steps β1 to β4 is in each case from 2.0 to 15.0 wt.% (based on the total amount of the amount of alkylene oxides used in the activation and copolymerisation).

**8.** Process according to any one of claims 1 to 7, wherein the amount of metal salts used is from 0.2 to 10.0 [mmol metal salt] / [mmol Co].

**9.** Process according to any one of claims 1 to 8, wherein there is used as the metal salt magnesium halide in an amount of from 0.8 to 4.0 [mmol metal salt] / [mmol Co], alkaline earth carboxylate and/or aluminium carboxylate.

**10.** Process according to any one of claims 1 to 8, wherein calcium carboxylate is used as the metal salt.

**11.** Process according to any one of claims 1 to 10, wherein the H-functional starter substances used are selected from at least one of the group consisting of alcohols, amines, thiols, aminoalcohols, thioalcohols, hydroxy esters, polyether polyols, polyester polyols, polyester ether polyols, polycarbonate polyols, polyether carbonate polyols, polyethyleneimines, polyether amines, polytetrahydrofurans, polyether thiols, polyacrylate polyols, castor oil, the mono-or di-glyceride of ricinoleic acid, monoglycerides of fatty acids, chemically modified mono-, di- and/or tri-glycerides of fatty acids, and $C_1$-$C_{24}$-alkyl fatty acid esters that contain on average at least 2 OH groups per molecule.

**12.** Process according to any one of claims 1 to 11, wherein the double metal cyanide catalyst used contains at least one double metal cyanide compound selected from the group consisting of zinc hexacyanocobaltate(III), zinc hexacyanoiridate(III), zinc hexacyanoferrate(III) and cobalt(II) hexacyanocobaltate(III).

**13.** Process according to claim 12, wherein the double metal cyanide catalyst used additionally contains at least one organic complex ligand selected from the group consisting of aliphatic ether, ethanol, isopropanol, n-butanol, isobutanol, sec-butanol, tert-butanol, 2-methyl-3-buten-2-ol, 2-methyl-3-butyn-2-ol, ethylene glycol mono-tert-butyl ether, diethylene glycol mono-tert-butyl ether, tripropylene glycol monomethyl ether and 3-methyl-3-oxetan-methanol.

**14.** Process according to any one of claims 1 to 13, which is carried out in a tubular reactor, stirrer vessel or loop reactor.

## Revendications

**1.** Procédé pour la préparation de polyéthercarbonate-polyols à partir d'une ou de plusieurs substances de départ à fonctionnalité H, d'un ou de plusieurs oxydes d'alkylène et de dioxyde de carbone en présence d'un catalyseur de type cyanure métallique double et en présence d'au moins un sel métallique, **caractérisé en ce que**

(α) le catalyseur de type cyanure métallique double, le sel métallique et la substance de départ à fonctionnalité H ou un mélange d'au moins deux substances de départ à fonctionnalité H sont disposés au préalable,
(β) pour l'activation :

(β1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape (α), cette addition de la quantité partielle d'oxyde d'alkylène pouvant le cas échéant avoir lieu en présence de $CO_2$,
(β2) dans une deuxième étape d'activation, après la pointe de température atteinte dans l'étape d'activation précédente, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation précédente, cette addition de la quantité partielle d'oxyde d'alkylène pouvant le cas échéant avoir lieu en présence de $CO_2$,

(γ) on ajoute un ou plusieurs oxydes d'alkylène et du dioxyde de carbone au mélange résultant de l'étape (β) ("copolymérisation"),

en utilisant comme sel métallique au moins un composé choisi dans le groupe constitué par les halogénures de métal alcalino-terreux, les carboxylates de métal alcalino-terreux ou les carboxylates d'aluminium.

**2.** Procédé selon la revendication 1, la copolymérisation étant réalisée à une pression totale (absolue) de 50 à 110 bars.

**3.** Procédé selon la revendication 1, où, pour l'activation

(β3) dans une troisième étape d'activation ou d'autres étapes d'activation après la pointe de température atteinte

dans l'étape d'activation précédente, l'étape (β2) est répétée une à cinq fois, cette addition de la quantité partielle ou ces additions des quantités partielles d'oxyde d'alkylène ayant lieu en l'absence de $CO_2$.

**4.** Procédé selon la revendication 3, où, pour l'activation

(β4) dans une autre étape d'activation ou d'autres étapes d'activation après la pointe de température atteinte dans l'étape d'activation précédente, l'étape (β3) est répétée une à cinq fois, cette addition de la quantité partielle ou ces additions des quantités partielles d'oxyde d'alkylène ayant lieu en présence de $CO_2$.

**5.** Procédé selon la revendication 4, où

(α) le catalyseur de type cyanure métallique double, au moins le sel métallique et la substance de départ à fonctionnalité H ou un mélange d'au moins deux substances de départ à fonctionnalité H sont disposés au préalable,
(β) pour l'activation :

(β1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape (α), cette addition de la quantité partielle d'oxyde d'alkylène ayant lieu en l'absence de $CO_2$,
(β2) dans une deuxième étape d'activation après la pointe de température atteinte dans l'étape d'activation précédente, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation précédente, cette addition de la quantité partielle d'oxyde d'alkylène ayant lieu en l'absence de $CO_2$,
(β3) dans une troisième étape d'activation après la pointe de température atteinte dans l'étape d'activation précédente, l'étape (β2) est répétée exactement une fois, cette addition de la quantité partielle ou ces additions des quantités partielles d'oxyde d'alkylène ayant lieu en l'absence de $CO_2$,
(β4) dans une autre étape d'activation ou d'autres étapes d'activation après la pointe de température atteinte dans l'étape d'activation précédente, l'étape (β3) est répétée exactement une fois, cette addition de la quantité partielle ou ces additions des quantités partielles d'oxyde d'alkylène ayant lieu en présence de $CO_2$,

(γ) on ajoute un ou plusieurs oxydes d'alkylène et du dioxyde de carbone au mélange résultant de l'étape (β) ("copolymérisation").

**6.** Procédé selon l'une quelconque des revendications 1 à 5,

(α) la substance de départ à fonctionnalité H ou un mélange d'au moins deux substances de départ à fonctionnalité H étant disposé(e) au préalable et l'eau et/ou d'autres composés volatils étant éliminés par une température augmentée et/ou une pression réduite ("séchage"), le catalyseur de type cyanure métallique double et/ou au moins un sel métallique étant ajouté à la substance de départ à fonctionnalité H ou au mélange d'au moins deux substances de départ à fonctionnalité H étant ajouté(s) avant ou après le séchage.

**7.** Procédé selon l'une quelconque des revendications 1 à 6, où la quantité partielle à chaque fois utilisée lors de l'activation dans les étapes β1 à β4 d'un ou de plusieurs oxydes d'alkylène représente 2,0 à 15,0% en poids (par rapport à la quantité totale de la quantité d'oxydes d'alkylène utilisée lors de l'activation et de la copolymérisation).

**8.** Procédé selon l'une quelconque des revendications 1 à 7, où la quantité des sels métalliques utilisée est de 0,2 à 10,0 [mmoles de sel métallique] / [mmoles de Co].

**9.** Procédé selon l'une quelconque des revendications 1 à 8, où on utilise comme sel métallique un halogénure de magnésium en une quantité de 0,8 à 4,0 [mmoles de sel métallique] / [mmoles Co], un carboxylate de métal alcalino-terreux et/ou un carboxylate d'aluminium.

**10.** Procédé selon l'une quelconque des revendications 1 à 8, où on utilise, comme sel métallique, du carboxylate de calcium.

**11.** Procédé selon l'une quelconque des revendications 1 à 10, où les substances de départ à fonctionnalité H utilisées

sont choisies parmi au moins un des groupes constitués par les alcools, les amines, les thiols, les aminoalcools, les thioalcools, les hydroxyesters, les polyétherpolyols, les polyesterpolyols, les polyesterétherpolyols, les polycarbonatepolyols, les polyéthercarbonatepolyols, les polyéthylèneimines, les polyétheramines, les polytétrahydrofurannes, les polyétherthiols, les polyacrylatepolyols, l'huile de ricin, le monoglycéride ou le diglycéride de l'acide ricinoléique, les monoglycérides d'acides gras, les monoglycérides, diglycérides et/ou triglycérides chimiquement modifiés d'acides gras et les esters $C_1$-$C_{24}$-alkyliques d'acides gras qui contiennent en moyenne au moins 2 groupes OH par molécule.

**12.** Procédé selon l'une quelconque des revendications 1 à 11, où le catalyseur de type cyanure métallique double contient au moins un composé de type cyanure métallique double du groupe constitué par l'hexacyanocobaltate (III) de zinc, l'hexacyanoiridate (III) de zinc, l'hexacyanoferrate (III) de zinc et l'hexacyanocobaltate (III) de cobalt (II).

**13.** Procédé selon la revendication 12, où le catalyseur de type cyanure métallique double utilisé contient en outre au moins un ligand complexe organique, choisi dans le groupe constitué par les éthers aliphatiques, l'éthanol, l'isopropanol, le n-butanol, l'iso-butanol, le sec-butanol, le tert-butanol, le 2-méthy1-3-butén-2-ol, le 2-méthyl-3-butyn-2-ol, l'éthylèneglycol-mono-tert-butyléther, le diéthylèneglycol-mono-tert-butyléther, le tripropylèneglycol-mono-méthyléther et le 3-méthyl-3-oxétane-méthanol.

**14.** Procédé selon l'une quelconque des revendications 1 à 13, qui est réalisé dans un réacteur tubulaire, une cuve agitée ou un réacteur à boucle à circulation interne.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 9948607 A
- WO 2004081082 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **J. KUYPER et al.** *Journal of Catalysis,* 1987, vol. 105, 163-174